(19) Europäisches Patentamt
European Patent Office
Office européen des brevets

(11) Veröffentlichungsnummer: **0 146 774**
**B1**

(12) # EUROPÄISCHE PATENTSCHRIFT

(45) Veröffentlichungstag der Patentschrift: **27.04.88**

(51) Int. Cl.⁴: **A 01 N 43/80**

(21) Anmeldenummer: **84113930.6**

(22) Anmeldetag: **17.11.84**

(54) **Verwendung von 3-Amino-1,2-benzisothiazolen als Mikrobizide zum Schutz technischer Materialien.**

(30) Priorität: **29.11.83 DE 3343091**

(43) Veröffentlichungstag der Anmeldung:
**03.07.85 Patentblatt 85/27**

(45) Bekanntmachung des Hinweises auf die Patenterteilung:
**27.04.88 Patentblatt 88/17**

(84) Benannte Vertragsstaaten:
**AT BE DE FR GB IT NL SE**

(56) Entgegenhaltungen:
**DE-A-1 670 920**
**DE-A-1 960 026**
**DE-A-2 803 755**
**DE-B-1 545 844**
**DE-B-1 795 344**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Böshagen, Horst, Dr., Wiesenstrasse 4, D-5657 Haan (DE)**
Erfinder: **Genth, Hermann, Dr., Am Heckerhof 60, D-4150 Krefeld 1 (DE)**
Erfinder: **Paulus, Wilfried, Dr., Deswatinesstrasse 90, D-4150 Krefeld 1 (DE)**

EP 0 146 774 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindungbetrifft die Verwendung von 3-Amino-1,2-benzisothiazolen als Wirkstoffe in mikrobiziden Mitteln zum Schutz technischer Materialien.

Aus der DE-A 28 03 755 sind 3-Amino-1,2-benzisothiazole und ihre Verwendung als Antimykotika bekannt.

Es wurde die Verwendung von 3-Amino-1,2-benzisothiazolen der Formel

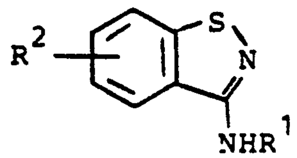

in der

$R^1$ gegebenenfalls substituiertes $C_1$-$C_6$ -Alkyl, Phenyl oder Benzyl bedeutet und

$R^2$ Wasserstof, Halogen oder gegebenenfalls substituiertes $C_1$-$C_6$-Alkyl, $C_1$-$C_6$-Alkoxy, Phenyl oder Benzyl bedeutet

als Wirkstoff in mikrobiziden Mitteln zum Schutz technischer Materialien gefunden.

Es ist überraschend, daß sich die erfindungsgemäßen 3-Amino-1,2-benzisothiazole zum Schutz technischer Materialien verwenden lassen, weil aus einer Wirkung gegen humanpathogene Pilze (DE-B 1 545 844) nicht auf eine Wirkung gegen die völlig unterschiedlichen Mikroorganismen an technischen Materialien geschlossen werden kann.

Niederalkyl bedeutet erfindungsgemäß einen geradkettigen oder verzweigten Kohlenwasserstoffrest mit 1 bis etwa 6 Kohlenstoffatomen. Beispielsweise seien genannt: Methyl, Ethyl, Propyl, Isopropyl, Butyl, Isobutyl, Pentyl, Isopentyl, Hexyl und Isohexyl. Bevorzugte Niederalkylreste sind der Methyl- und der Ethylrest.

Niederalkoxy bedeutet erfindungsgemäß einen geradkettigen oder verzweigten Alkyletherrest mit 1 bis etwa 6 Kohlenstoffatomen. Beispielsweise seien genannt: Methoxy, Ethoxy, Propoxy, Isopropoxy, Butoxy, Isobutoxy, Pentoxy, Isopentoxy, Hexoxy und Isohexoxy.

Halogen bedeutet erfindungsgemäß Fluor, Chlor, Brom und Iod, bevorzugt sind Fluor und Chlor.

Die $C_1$-$C_6$-Alkyl-, $C_1$-$C_6$-Alkoxy-, Phenyl- oder Benzylreste können gegebenenfalls substituiert sein. Als Substituenten seien insbesondere Niederalkylreste ($C_1$ bis etwa $C_6$) und Halogene (Fluor, Chlor, Brom oder Iod, bevorzugt Fluor und Chlor) genannt.

Erfindungsgemäß werden 3-Amino-1,2-benzisothiazole der Formel

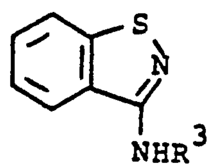

in der

$R^3$ $C_1$-$C_6$-Alkyl bedeutet, bevorzugt.

Beispielsweise sei das 3-Ethylamino-benzisothiazol genannt.

Die Herstellung der 3-Amino-1,2-benzisothiazole ist an sich bekannt. Sie erfolgt .durch Umsetzung der entspechenden 3-Chlor-1,2 -benzisothiazoliumchloride mit Ammoniak [Chem. Ber. 90, 2566 (1966)]. Sie können aber auch hergestellt werden wenn man 3-[1.2-Benzisothiazolyl-(3)]-imino-1.2-benzodithiole mit primären Aminen umsetzt (DE-OS 28 03 755).

Technische Materialien sind erfindungsgemäß nicht lebende Materialien, die für die Verwendung in der Technik zubereitet worden sind. Beispielsweise können technische Materialien, die durch den erfindungsgemäßen Wirkstoff vor einer mikrobiellen Veränderung oder Zerstörung geschützt werden sollen, Klebstoffe, Leime, Papiere und Kartone, Textilien, Leder, Holz, Anstrichmittel und Kunststoffartikel, Kühlschmiermittel und andere Materialien sein, die durch Mikroorganismen zersetzt werden können. Im Rahmen der zu schützenden Materialien seien noch Teile von Produktionsanlagen, beispielsweise Kühlwasserkreisläufe, genannt, die durch Mikroorganismen beeinträchtigt werden können. Im Rahmen der vorliegenden Erfindung seien als technische Materialien vorzugsweise Klebstoffe, Leime, Papier und Karton, Leder, Holz, Anstrichmittel, Kühlschmiermittel und Kühlkreisläufe genannt.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Substanzen gegen Bakterien, Schimmelpilze, insbesondere holzverfärbende und holzzerstörende Pilze (Basidiomyceten), sowie gegen Schleimorganismen und Algen.

Es seien beispielsweise Mikroorganismen der folgenden Gattungen genannt:

Alternaria, wie Alternaria tenuis,

Aspergillus, wie Aspergillus niger,

Chaetomium, wie Chaetomium globosum,

Coniophora, wie Coniophora puteana,

Lentinus, wie Lentinus tigrinus,

Penicillium, wie Penicillium glaucum,
Polyporus, wie Polyporus versicolor,
Aureobasidium, wie Aureobasidium pullulans,
Sclerophoma, wie Sclerophoma pityophila,
Staphylococcus, wie Staphylococcus aureus,
Pseudomonas, wie Pseudomonas aeruginosa,
Escherichia, wie Escherichia coli.

Je nach Anwendungsgebiet kann der erfindungsgemäße Wirkstoff in die üblichen Formulierungen überführt werden, wie Lösungen, Emulsionen, Suspensionen, Pulver, Pasten und Granulate.

Diese können in an sich bekannter Weise hergestellt werden, z. B. durch Vermischen der Wirkstoffe mit einem Streckmittel, das aus flüssigen Lösungsmitteln und/oder festen Trägerstoffen besteht, gegebenenfalls unter Verwendung von oberflächenaktiven Mitteln, wie Emulgatoren und/oder Dispergiermitteln, wobei beispielsweise im Falle der Benutzung von Wasserstreckmitteln gegebenenfalls organische Lösungsmittel wie Alkohole als Hilfsmittel verwendet werden können.

Organische Lösungsmittel für den Wirkstoff können beispielsweise Alkohole, wie niedere aliphatische Alkohole, vorzugsweise Ethanol oder Isopropanol, oder Benzylalkohol, Ketone wie Aceton oder Methylethylketon, flüssige Kohlenwasserstoffe, wie Benzinfraktionen, halogenierte Kohlenwasserstoffe, wie 1,2-Dichlorethan sein.

Die mikrobiziden Mittel enthalten den Wirkstoff im allgemeinen in einer Menge von 0,5 bis 95 %, bevorzugt von 5 bis 80 %.

Die Anwendungskonzentration der erfindungsgemäßen Wirkstoffe richtet sich nach der Art und dem Vorkommen der zu bekämpfenden Mikroorganismen, sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 5 Gew.-%, vorzugsweise von 0,001 bis 0,5 Gew.-%, bezogen auf das zu schützende Material.

Der erfindungsgemäße Wirkstoff kann auch in Mischung mit anderen bekannten Wirkstoffen vorliegen. Beispielsweise seien die folgenden Wirkstoffe genannt: Benzylalkoholmono(poly)hemiformal und andere Formaldehydabspaltende Verbindungen (z. B. Hexahydro-s-triazine), Benzimidazolyl-methylcarbamate, Tetramethyl-thiuramdisulfid, Zinksalze von Dialkyldithiocarbamaten, 2, 4, 5, 6-Tetrachlorisophthalonitril, Thiazolylbenzimidazol, Mercaptobenzthiazol, Trialkylzinnverbindungen, Methylenbisthiocyanat und Phenolderivate, wie 2-Phenylphenol, (2,2'-Dihydroxy-5,5'-dichlor)-diphenylmethan und 3-Methyl-4-chlorphenol.

## Herstellungsbeispiel

### Beispiel 1

300,4 g (1,0 Mol) 3-[1,2-Benzisothiazolyl-(3)]-imino-1.2-benzodithiol, 157,8 g (3,5 Mol) Ethylamin und 10 g Na-Methylat werden in 2,0 l eines Methanol/Ethanol 1 : 1-Gemisches suspendiert und die Mischung 6 Stunden im Autoklaven auf 150°C erhitzt. Anschließend wird das Lösungsmittel im Vakuum abgezogen und der Rückstand in 500 ml konzentriertem HCl gelöst. Diese Lösung wird mit 500 ml Wasser verdünnt und das ausfallende Produkt durch Ausschütteln mit Ether abgetrennt. Die klare wäßrige Lösung wird durch Zugabe von Natronlauge alkalisch gestellt und die freigesetzte Base in Ether aufgenommen. Man erhält 200 g Rohbase, die durch Vakuumdestillation gereinigt wird.

Ausbeute: 160 bis 180 g (45 bis 50 %) 3-Ethylamino-1.2-benzisothiazol.

## Anwendungsbeispiele

### Beispiel 2

Zum Nachweis der Wirksamkeit gegen Pilze werden die minimalen Hemm-Konzentrationen (MHK) des erfindungsgemäßen Wirkstoffes gemäß Beispiel 1 bestimmt:

Ein Agar, der aus Bierwürze und Pepton hergestellt wird, wird mit dem erfindungsgemäßen Wirkstoff in Konzentrationen von 0,1 mg/l bis 5000 mg/l versetzt. Nach Erstarren des Agars erfolgt Kontamination mit Reinkulturen der in der Tabelle aufgeführten Testorganismen. Nach 2-wöchiger Lagerung bei 28°C und 60 bis 70 % rel. Luftfeuchtigkeit wird die MHK bestimmt. MHK ist die niedrigste Konzentration an Wirkstoff, bei der keinerlei Bewuchs durch die verwendete Mikrobenart erfolgt, sie ist in der nachstehenden Tabelle angegeben. Zum Vergleich wird N-Cyclohexyl-N-methoxy-2,5-dimethyl-3-furamid (US-A 3 993 772) mitgeprüft.

**Tabelle 1** MHK's der erfindungsgemäßen Substanz für Pilze

| Testorganismen | MHK's in mg/l | |
|---|---|---|
| | Wirkstoff | Vergleichswirkstoff |
| Alternaria tenuis | 15 | |
| Aspergillus niger | 50 | >5000 |
| Chaetomium globosum | 35 | 100 |
| Coniophora puteana | 50 | 0,5 |
| Lentinus tigrinus | 5 | 3,5 |
| Penicillium glaucum | 20 | >5000 |
| Polyporus versicolor | 10 | >5000 |
| Aureobasidium pullulans | 20 | 200 |
| Sclerophoma pityophila | 2 | 3500 |
| Trichoderma viride | 200 | 5000 |

Es wird deutlich, daß die erfindungsgemäße Substanz dem handelsüblichen Wirkstoff deutlich überlegen ist, insbesondere im Hinblick auf die Breite des Wirkungsspektrums.

**Beispiel 3**

Wirkung gegen Schleimorganismen

Erfindungsgemäße Verbindungen werden in Konzentrationen von jeweils 0,1 bis 100 mg/l in Allens Nährlösung (Arch. Mikrobiol. 17, 34 bis 53 (1952)), die in 4 l sterilem Wasser, 0,2 g Ammoniumchlorid, 4,0 g Natriumnitrat, 1,0 Dikaliumhydrogenphosphat, 0,2 g Calciumchlorid, 2,05 g Magnesiumsulfat, 0,02 g Eisenchlorid, und 1 % Caprolactam enthält, in wenig Aceton gelöst, zur Anwendung gebracht. Kurz vorher werden die Nährlösungen mit Schleimorganismen (ca. $10^6$ Keime/ml), die aus bei der Polyamid-Herstellung verwendeten Spinnwasser-Kreisläufen isoliert wurden, infiziert. Nährlösungen, die die minimale Hemmkonzentration (MHW) oder größere Wirkstoffkonzentrationen aufweisen, sind nach 3-wöchiger Kultur bei Raumtemperatur noch völlig klar, d.h. die in wirkstofffreien Nährlösungen nach 3 bis 4 Tagen bemerkbare starke Vermehrung der Mikroben und Schleimbildung unterbleibt.

Für den Wirkstoff gemäß Beispiel 1 läßt sich auf diese Weise ein MHK von 75 mg/l ermitteln.

**Patentansprüche**

1. Verwendung von 3-Amino-1,2-benzisothiazolen der Formel

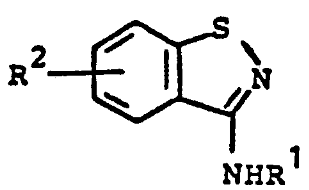

in der

$R^1$ gegebenenfalls substituiertes $C_1$-$C_6$-Alkyl, Phenyl oder Benzyl bedeutet und

$R^2$ Wasserstoff, Halogen oder gegebenenfalls substituiertes $C_1$-$C_6$-Alkyl, $C_1$-$C_8$-Alkoxy, Phenyl oder Benzyl bedeutet,

als Wirkstoffe in mikrobiziden Mitteln zum Schutz technischer Materialien.

2. Verwendung nach Anspruch 1, dadurch gekennzeichnet, daß die mikrobiziden Mittel 0,5 bis 95 Gew.-% des Wirkstoffes enthalten.

**Claims**

1. Use of 3-amino-1,2-benzisothiazoles of the formula

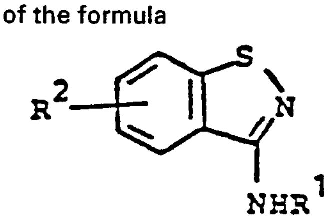

in which

$R^1$ denotes optionally substituted $C_1$-$C_6$- alkyl, phenyl or benzyl and

$R^2$ denotes hydrogen, halogen or optionally substituted $C_1$-$C_6$- alkyl, $C_1$-$C_6$- alkoxy, phenyl or benzyl, as the active compounds in microbicidal agents for protecting industrial materials.

2. Use according to Claim 1, characterized in that the microbicidal agents contain 0.5 to 95 % by weight of the active compound.

**Revendications**

1. Utilisation des 3-amino-1,2-benzoisothiazoles de formule

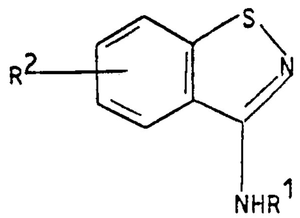

dans laquelle

$R_1$ représente un groupe alkyle en $C_1$-$C_6$, phényle ou benzyle éventuellement substitué, et

$R^2$ représente l'hydrogène, un halogène ou un groupe alkyle en $C_1$-$C_6$, alcoxy en $C_1$-$C_6$, phényle ou benzyle éventuellement substitué,

en tant que substances actives dans des produits microbicides servant à la protection de matières techniques.

2. Utilisation selon la revendication 1, caractérisée en ce que les produits microbicides contiennent de 0,5 à 95 % en poids de la substance active.